# EUROPEAN PATENT SPECIFICATION

(11) **EP 3 801 161 B1**
(45) Date of publication and mention of the grant of the patent: **28.08.2024**
(21) Application number: 19811947.1
(22) Date of filing: 21.05.2019
(51) Int. Cl.: A47J 43/18, B26B 29/06

(54) **MULTI-PURPOSE HOLDING DEVICE AND METHOD FOR USE OF THE SAME**
MEHRZWECKHALTEVORRICHTUNG UND VERFAHREN ZU IHRER VERWENDUNG
DISPOSITIF DE MAINTIEN POLYVALENT ET PROCÉDÉ D'UTILISATION DUDIT DISPOSITIF DE MAINTIEN

(30) Priority: 30.05.2018 NO 20180751
(43) Date of publication of application: 14.04.2021
(73) Proprietor: Cleangrip AS, 3614 Kongsberg (NO)
(72) Inventor: STEPIEN, Tom Rune, 3614 Kongsberg (NO)
(74) Representative: Acapo AS
(86) International application number: PCT/NO2019/050112
(87) International publication number: WO 2019/231333

(56) References cited:
- EP-A1- 0 689 906
- WO-A1-2007/085103
- DE-A1- 102015 007 700
- FR-A- 1 030 314
- GB-A- 1 170 140
- GB-A- 2 432 781
- NL-C2- 1 032 078
- US-A- 1 729 624
- US-A- 3 407 927
- US-A- 4 782 953
- US-A- 5 715 736
- US-A1- 2005 160 512
- US-A1- 2007 095 191
- Retrieved from the Internet <URL:https://www.plastnet.se/article/view/520130/ciba_satsar_pa_bakteriedodande_plast> [retrieved on 20190730]

## Description

### The Technical Field of the Invention

The present invention relates to a multi-purpose holding device suitable for hygienic or clean holding of a product in a stable and firm manner, such product being for example food products of different types. The area of use may for example be slicing of the product into slices or bits or pieces, avoiding contact between the hand of the person holding the product and the product itself, or for handling hot products.

The present invention also relate to a method for use of such device.

### Background of the Invention

Food product surfaces, such as bread, meat or other food products to be handled and/or cut into slices or bits, using sharp knives or other sharp cutting devices, are a source of spreading viruses and bacteria, due to the porous and organic surface, and since the food has to be firmly held by the hand when slicing.

In many instances when slicing bread, a number of persons may be in contact with the same bread when slicing, in particular as part of meals in hotels or the like. When slicing bread, one hand is used to firmly grip around the bread in order to hold the bread firmly against a supporting surface in a more or less stable manner, while the other hand is used to hold the knife for slicing.

This is not hygienic, since the hand holding of the bread may be infested or contaminated by viruses, bacteria or other detrimental substances or organisms. In addition, it is a risk of cutting a flesh wound in the fingers holding the bread.

In hotels, old people's home, kindergarten, schools, cantinas or hospitals, a cloth is commonly placed over and partly around the bread in order to prevent direct contact between the hand and the bread. The cloth is moved between different types of bread and may be turned upside down or drop down on the floor and taken up and used again. The same problem may occur in an ordinary household, where different persons of the household shall slice their bread. It may be adults, kids or juveniles with a cold, sneezing with dripping nose or dirty hands that may be in direct contact with the bread to be cut, or kids coming directly in after having played, slicing the bread without having washed their hand throroughly enough. In such case, the bacteria are easily spread and transferred amongst the family.

When slicing meat, the meat is most often very hot and in addition, the surface may be greasy and slippery, requiring use of a fork in order to fix the meat stably against the supporting surface when slicing. Repeatedly use of a fork for fixation of the slippery or greasy meat to the supporting surface may often result in difficulties in obtaining equal slices and/or many penetrations in the upper meat surface caused by the teeth of the fork, resulting in uneven slices or disintegration of the piece of meat. Moreover, when handling greasy meat the fat tends to stick to the fingers and hand, requiring repeatedly need for cleaning and washing the hands before touching other objects.

US 3,407,927 discloses a container with a stack of sanitary paper tongs contained therein. The tongs are arranged in stacked relation in the container and are draped over the top edge of a central, vertical partition in the container. Each tong is provided with a pocket at each of its ends and the draping of the tongs in the stack disposes the tongs in a position so that their pockets have open mouths directed upwardly. This permits the hand of a user to enter the container and insert his fingers and thumb into the respective pockets in the uppermost tongs in the stack and lift the tongs from off the stack and remove it from the container. The tongs are thus picked up and handled without the fingers of the user touching that part of the tongs which contacts with an article to be handled so that such article will then be handled in a hygienic manner and safeguarded from contamination.

US 5,715,736 discloses a hand held food holding device to secure articles of food for cutting or slicing which includes a base, a first wall, and a second wall. The first and second walls being connected to the base and extending upward therefrom to create a U-shaped member able to receive and secure articles of food while they are cut or sliced.

US 2005/0160512 A1 discloses a food holder used to hold bread during slicing of the bread. The food holder is made of a flexible material, preferably molded as a unitary piece of silicone.

US 2007/0095191 A1 discloses knife assemblies used in food preparation.

WO 2007/085103 discloses a holder for use when slicing bread. The holder has a handle which is connected by means of a connecting part to a cover, to which a plurality of supporting legs are attached. To hold an object in position, the holder is held at the handle and put onto the object to be held.

US 1,729,624 discloses a U-shaped slicing device comprising a yoke-shaped body to be mounted upon and partially encircling a product to be sliced, and means for guiding the blade of the knife over the surface of one end of the body in cutting a slice of the product. The slicing device is also provided with a handle, rigidly fixed to the device for gripping during slicing. According to this device, the hand holds a grip around a handle itself and is not in contact with the bread to be sliced, thus the bread is not sufficiently supported in a stable manner.

US 5,287,784 discloses a bread slicing device designed specifically for use with cylindrical shaped loaves produced by home automatic bread baking machines. The device consists of two parts: a clear cover with built in knife holder and a bread slicing holder. The bread slicing holder is rigid, monolithic in construction, featuring two opposing parallel slicing guide side walls which extend vertically from the base of the unit along two lateral outside edges, facing upwards when slicing. The lower two-thirds of the side walls interior surfaces are concave forming with the concave bottom a tapered sharply textured cylindrical cavity. Bread is inserted into slicing holder by way of a wedged shaped entry chute. The chute momentarily compresses the bread as it is inserted into the top of the bread slicing holder. Bread loaf then expands, firmly securing it into the cylindrical cavity. The slicing guide side walls are divided by a series of evenly spaced parallel vertical slots. These slots guide the cutting implement permitting accurate and consistent slices to be produced.

It is therefore a need for a device that is hygienic, where the possibility of direct contact with a gripping and holding hand and the product to be held is eliminated, or at least substantially reduced, and also reducing the cutting risk for cuts or flesh wounds in the fingers or the holding hand.

### Summary of the Invention

The invention is based on the principle of using a thin, flexible or pliable sheet, that easily may adapt to or may partly be wrapped around the contour of the product to be held or handled and preferably also easily secure a firm grip around the product during handling. Moreover, the present invention is based on the principle of avoiding direct and/or contaminating contact between a person's hands and the food product to be handled, thus isolating the product from a direct hand touch and still achieving a firm grip around the product to be held.

It is a main object of the present invention to provide a multi-purpose holding device that for example may be used for slicing bread, baguettes, meat, roast beef and the like, requiring slicing into for example thin, evenly cut slices; for handling hot food, and in particular, but not exclusively hot meat or hot objects such as for example baking tray; or for handling hot objects such as bred or steaks, taken directly out from the oven, or for handling hot objects such as frying pan or baking tray.

It is an object of the present invention to provide a product for handling food where the possibility of contaminating or spreading bacteria or viruses from a person's hands to the product is eliminated or at least substantially reduces.

It is another object of the invention to eliminate or at least substantially reduce the risk for causing injury or cuts when slicing a product with a sharp cutting device.

Yet another object of the invention is to provide a multi-purpose device for holding and carrying object, such as hot products or products prone to being contaminated by bacteria and viruses.

A further object of the invention is to provide a flexible and pliable holder configured to easily adapt to the form of the object to be held and where the hand of the holder easily may hold around the object, all in accordance with the physiological build-up of a hand, easing the handgrip around the object to be held.

Another object of the present invention is to provide a device where the objects to be sliced are visible through the device.

Another object of the invention is to provide a hand held device provided with a certain degree of form stability, providing a certain inherent resistance against easily changed shape.

A still further object of the invention is to provide a device for holding products, ensuring a form and non-slippery holding effect,

Typical areas of use may for example be handling hot food, for example transferring the food from a frying pan or an oven to a cutting plate; cutting or slicing baguettes; use as an isolating holding device for taking out a hot frying pan or baking tray out of the oven; taking out hot bread or a steak from the oven; or slicing a steak or the like.

The objects specified is achieved by use of a device as further defined by the independent claim, while, embodiments, variants or alternatives are defined by the dependent claims.

According to the present invention there is provided a profiled device for holding a product according to claim 1.

The holder may be in the form of an elongate profile where the profile is provided with two long pliable and flexible surfaces that may be pressed by the holding hand into firm contact with an object arranged between the two sides. The grip around the object may be obtained by putting the hand through an opening in the handle, allowing the fingers and the palm of the hand to provide the grip. The inner surfaces may be provided with a number of outwards protrusions or ribs extending in a crosswise direction of the elongated holder.

According to an embodiment, the profile may be extruded of a polymer containing anti-septic particles, for example silver particles. Moreover, the profile may be composed of plastic materials having different properties, co-extruded with a stiffer material in the bottom of the U-shaped profile and a softer material in both legs. Alternatively or in addition, the holding device may be provided with stiffening ribs extending in an orthogonal direction with respect to the longitudinal direction of the object to be held.

According to yet another embodiment, parts of or the entire device is made of a transparent material. Moreover, the length of the device in respect to the inner opening of the handle may be such that the hand is prevented for being exposed to risk for flesh wound during slicing.

According to another embodiment, the legs of the profiles at the external surface at each end may be formed with a pocket for housing the fingertips, such that the inner surface towards the object to be sliced may be prevented from being contaminated by the fingers, also in case the device unintentionally drops down on the floor.

According to a variant, the handle is dimensioned and formed in such way that the fingers and at least a part of the palm of the hand may be threaded through the opening of the handle either on top or on both sides. It should be appreciated although handles are shown either on top of the device or at the free ends of the legs, it should be noted that the handle instead may be offset in a sideways direction instead of being arranged o the top as disclosed.

The handle(s) may form an integrated part of the profile or device and may according to yet another embodiment form an angle with the longitudinal direction of the holder, adapted to anatomical build-up of a hand when holding an object. Such angle mat for example be 30°

The invention also relates to a method for holding a product during slicing according to claim 13.

By using a device according to the invention spreading of bacteria and viruses through handling of food and other object is at least substantially reduced, since the food will not be in direct contact with the hand holding the product.

Moreover, the risk of causing flesh wounds or cuts during slicing of the food is at least substantially reduced.

The length of the legs may be configured in such way that the length of the legs is adapted to the height or cross sectional shape of the product to be held.

### Short Description of the Drawings

In the following, embodiments shall be described in conjunction with the attached drawings, wherein:
Figure 1 shows schematically and in perspective an embodiment of the present invention suited for fixing a bread or a steak or meat to be sliced to a supporting surface;
Figure 2 shows schematically an end view of the device shown in perspective in Figure 1;
Figure 3 shows schematically a side view of the device shown in perspective in Figure 1; and
Figure 4 shows schematically and in perspective another embodiment of a device according to the invention.

### Detailed Description of Embodiments of the Invention

Below, embodiments of the invention shall be described in further details, referring to the attached drawings, It should be appreciated, however, that the invention is defined by the attached patent claims.

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to freezing of biomass or seafood on board a fishing vessel, which may be used for catching i.e. pelagic fish to be frozen directly without being intermediate stored for example at line fishing vessels.

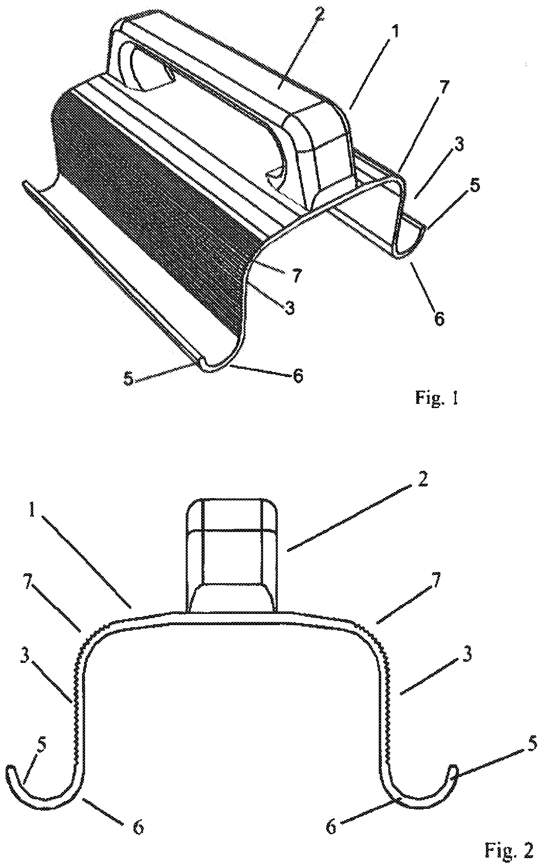

Figure 1 shows schematically and in perspective an elongated device 1 preferably with a uniform general body in longitudinal direction, suitable for fixing a bread (not shown) to a supporting surface (not shown). The supporting surface may for example be a breadboard. As indicated in the Figure, the device 1 may have a general, more or less U-shape, more or less adapted to the cross-sectional shape of the bread. The device 1 is made of a thin, pliable and flexible material and may at the outer surface of the bottom region of the U-shape be provided with a handle 2 in a form of a looped or U-shaped body with an opening 4, allowing the user to put the hand with of the fingers through the opening 4, while the thumb or the palm of the hand remains of the opposite side, enabling a grip around the device 1 and the product to be held at the bottom of the U-shaped profile, and consequently around the object within the U-shaped device. In this way the hand will have a firm grip around the product and by providing a downwards pressure onto the supporting operation a firm fixture of the object against the supporting surface is provided.

Since the device 1 at least along parts, is pliable and flexible, then the device may more easily or readily take the shape of the object to be held.

The material used may be of a suitable plastic material, for example containing an anti-septic material, such as for example silver, providing both an inner and outer hygienic surface, not contaminating the object, goods, or product to be held and not transferring bacteria or viruses to the next user holding or using the device 1.

The device 1 comprises a main elongated body, preferably of a plastic material and with a preferably uniform U-shaped cross sectional shape in longitudinal direction, suitable for being extruded. The body comprising two legs 3 spaced apart where one end of the legs 3 are connected to an intermediate part, the three parts forming a monolithic or unitary body. The interconnection between the one end of each leg 3 and the intermediate part may be curved or arced transition 7. It should be appreciated that the free end of each of the two legs 3 of the U-shaped body may be provided with an outwards projecting and upwards projecting flipped ends5, the transition 6 between the legs 3 and the upwards extending flips 5 being curved or arced. The purpose of this arced part to the enhance support against the supporting surface and to eliminate, or at substantially reduce the possibility of human contact with the supporting surface or the hand-held object, inside the U-shaped device 1.

Since the device 1 is flexible and pliable, shaped as an elongate U- or V-shaped profile 1, both the two legs 3 of the U-profile 1 may be pressed in towards the object to be held by the holding hand, such as for example a bread or a piece of meat (not shown), until a firm grip around the object is obtained, with the hand placed through the opening 4 of the handle 2 and with a hand grip on both sides of the U-shaped profile 1.

The embodiment disclosed is based on use of a more or less U-shaped profile 1, where the closed, intermediate part of the U-shaped profile 1 may have a more or less flat part in the area for the attached handle 2, or a curved transition part 7, while the legs 3 may for example project straight or slightly angled in downwards and outwards direction from the closed end part of the U-shaped profile.

According to one alternative a part of the closed part of the U-shaped profile 1, and/or a part of the outwardly extending legs 3 may be less flexible than the transition parts between the closed end and the stiffer leg parts.

According to one embodiment the present invention may be formed by a suitable material, dimensioned and configured to obtain the hand gripping effects for firmly holding an object. Such material may for example be anti- bacterial silicone rubber and the shape of the device may also have any other suitable shape than a U-profile in longitudinal direction, as long as the intended purposes are fulfilled.

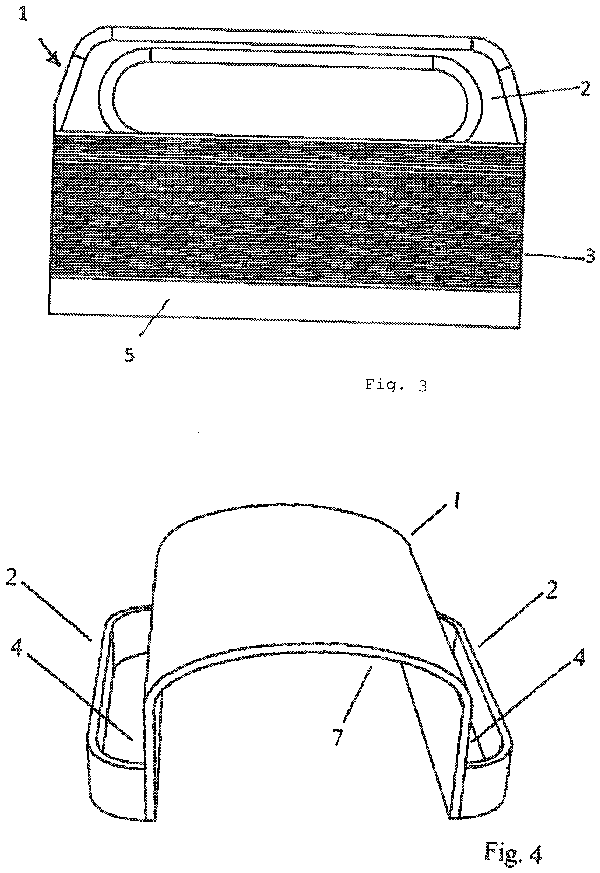

As shown in Figure 1 the device may be provided with a handle 2 arranged on the outer surface of the closed end of the profile, while according to the embodiment shown in Figure 4, the device is provided with a closed handle 2 at outer surface of both of the free ends of the profile. In the latter embodiment, the free ends of the legs are not provided with the curved lower end 5 and the flip 5, as disclosed in Figure 1, the two handles 2 of Figure 4 serving more or less the same purposes as the flip 5 ends of Figure 1. The handles shown in Figure 4, may prevent the fingers from being exposed to the sharp edge of the cutting knife. In addition, the free end of the legs according to this embodiment provides a more stiff and rigid free end of the legs.

The handle may be aligned with the main longitudinal direction of the holder or form an angle with said longitudinal direction.

By providing the device 1 with one or more handles 2, enabling a hand to be introduced I between the handle 2 and the device 1, makes the device 1 easy to be lifted and moved from one object to another. With a hand introduced under the handle with fingers on both side of the profile 1, provides the required clamping forces on the object to be lifted and/or sliced, thus securing a sufficient fixture of the object and also a sufficient pressure against the supporting surface.

If the device 1 according to the invention generally is made of a more stiff, rigid and less pliable or flexible material, the transition part between the closed part of the device 1 and the legs 3 may be provided with a hinged transition made of a more flexible and pliable material and/or provided with one or more thinner section extending in longitudinal direction in the transition zone. In such case the bending effect may mainly be obtain by bending in the curved upper, transition part 7 of the holder.

If the material chosen for the device is a non-elastic or pliable material, the device may be provided with one or more section allowing bending and compressing or squeezing the device around the object, said section preferably being in the transition zone between the legs and the transverse part, interconnecting one end of each leg. Such hinged part may be made of a softer or more bendable material, or may comprise one or more parallel lines in longitudinal direction of the device with less thickness, forming a bending line. Such art may be co-extruded I with the remaining part of the device during manufacturing.

When moving the device to a new product to be held, the clamping force introduces by the hand holding the device is eased, relieving the compressive force on the object. This allows for a reduced pressure exerted on to the product. In such case the holding hand can be lifted off, moving the device to another object to be sliced.

The U-shape of the device secures that the inner surface of the device, if and when dropped to the floor, will not be in contaminated contact with the floor.

By using two different polymers, one type for obtaining the required flexibility in parts of the device intended to be more flexible and one for obtaining a stiffer and more rigid handle region of the device, i.e. by for example co-extrusion, a multi-purpose holding device to be placed around the product to be firmly held enabling in addition a firm grip, is provided. Consequently a firm grip around the product to be held may be obtained by allowing the fingers to press firmly the device against the product to be held, the palm of the hand pressing firmly the device and the food to be sliced down onto the supporting surface, stably and firmly fixing the food against the supporting surface..

The stiffer and more rigid part of the device 1 may be formed of a more transparent polymer, enabling the person to observe the product to be sliced. The polymers used may include particles of an anti-septic character, such as for example small and minute silver particles, ref. https://www.plastnet.se/article/view/520130/ciba satsar pa bakteriedodande plast, The purpose of this feature is to prevent spreading bacteria due to use of the device itself.

The handle 2 may be formed of a plastic or wooden material, where both ends may be provided with a guiding device, serving as a guiding surface for the knife. The handle may be glued or bolted to the rigid part of the device. The surface of the device may also have printed the trademark or other decorations or text.

According to another embodiment of the invention, the central handle may be offset to one side of a longitudinal plane of symmetry extending lengthwise through the holder. In addition or instead, the central handle and its opening may be arranged in a skewed position in respect to the longitudinal axis or longitudinal plane of symmetry of the device..

Figure 2 shows schematically an end vie of the device shown in perspective in Figure 1, while Figure 3 shows schematically a side view of the device shown in perspective in Figure 1. As shown, the part with the handle 2 is relatively flat, It should be appreciated, however, that this part may have a shape closer to V-shaped or may be convex in an upwards direction. Moreover, the Figure indicates that this portion has a thicker part, extending sideways on both side of the handle 2, while the vertical legs 3 are thinner and may in addition as an alternative, be provided with tiny ribs or the like to secure a better grip and/or enhance the flexibility and bendability of the device 1. The purpose of the flips is to provide a better support on the supporting surface and also protection and against flesh wounds together with reduce the possibilities of finger contact with the surface intended to face towards the product be held.

Figure 4 shows schematically and in perspective another embodiment of a device according to the invention. As indicated, the device 1 is provided with a handle 2 at each free end of the legs 3. In addition the upper surface is arced,'

The holding device may be provided with stiffening ribs extending in an orthogonal direction with respect to the longitudinal direction of device and the object to be held.

In addition to possible non-slippery surface arranged on the side of the holder facing the product to be held, the surface against which the holders hand is resting may also be provided with a contour or texture that avoid unintentional slippery of the hand, even with a greasy hand or surface.

The scope of protection of the current invention is defined by the appended claims.

| | |
|---|---|
| 1 | Flexible holder for objects |
| 2 | Handle |
| 3 | Legs |
| 4 | Opening in handle |
| 5 | Flip |
| 6 | Lower transition zone |
| 7 | Upper transition zone |

## Claims

1. A profiled device (1) for holding a product or object, for example when slicing the product or when holding and moving a hot product or object, the profiled device (1) being provided with two opposed side parts (3), spaced apart by and connected to an intermediate part, the device (1) having at least a shape in longitudinal direction with a longitudinal profile, the device (1) having two legs or flanges (3) forming a monolithic or unitary body with the intermediate part, the two legs or flanges (3) being pliable and flexible that may be pressed against a product or an object placed inside the device (1) by means of a person's hand placed around the object to be held,**characterized in that** the device (1) is formed by anti-bacterial silicone rubber.

2. Device (1) according to claim 1, wherein the device (1) contains anti-septic particles, for example silver particles.

3. Device (1) according to any one of the claims 1 to 2, wherein the device (1) comprises both an inner and outer hygienic surface.

4. Device (1) according to any one of the claims 1 to 3, wherein the device (1) comprises at least one handle (2).

5. Device (1) according to any one of the claims 1 to 4, wherein the device (1) comprises two or more handles (2)

6. Device (1) according to any one of the claims 4 to 5, wherein the length of the device (1) in respect to the inner opening (4) of the handle (2) is such that the hand is prevented for being exposed to risk for flesh wound during slicing.

7. Device (1) according to any one of the claims 4 to 6, wherein the fingers and at least part of the palm of the hand is threaded through the opening (4) of the handle (2) either on top or on both sides of the device.

8. Device (1) according to any one of the claims 4 to 7, wherein the device (1) is provided with a handle (2) at each free end of the legs.

9. Device (1) according to any one of the claims 1 to 8, wherein the legs (3) of the device (1) is formed with a pocket (5,6) for housing the finger tips, such that the inner surface towards the object to be sliced is prevented from being contaminated by the fingers, also in case the device (1) unintentionally drops down on the floor.

10. Device according to any one of the claims 4 to 9, wherein the handle (2) forms an integrated part of the profile (1).

11. Device according to any one of the claims 4 to 9, wherein the handle is offset to one side of a longitudinal plane of symmetry extending lengthwise through the device.

12. Device according to any one of the claims 1 to 11, wherein at least one, preferably both the inner and outer surface, is provided with an anti-slippery texture or shape.

13. Method for holding a product or object during slicing by using a device (1) according to any one of the claims 1 to 12, **characterized in that** the device (1) is put around the object to be sliced by putting the hand around the top of the device (1) and pressing the fingers firmly against the outer surface of the legs (3) of the device (1), the finger tips being positioned within an externally arranged pocket at the lower end for housing the fingertips, formed at the ends of the side parts (3), while the palm of the hand pressing the device (1) and the object firmly down against a supporting surface.

## Patentansprüche

1. Profilierte Vorrichtung (1) zum Halten eines Produkts oder Gegenstands, zum Beispiel beim Schneiden des Produkts oder beim Halten und Bewegen eines heißen Produkts oder Gegenstands, wobei die profilierte Vorrichtung (1) mit zwei gegenüberliegenden Seitenteilen (3) versehen ist, die durch ein Zwischenteil beabstandet und mit diesem verbunden sind, wobei die Vorrichtung (1) zumindest eine Form in Längsrichtung mit einem Längsprofil aufweist, wobei die Vorrichtung (1) zwei Schenkel oder Flansche (3) aufweist, die mit dem Zwischenteil einen monolithischen oder einheitlichen Körper bilden, wobei die beiden Schenkel oder Flansche (3) biegsam und flexibel sind, die gegen ein Produkt oder einen Gegenstand, der in der Vorrichtung (1) platziert ist, mittels einer um den zu haltenden Gegenstand gelegten Hand einer Person gedrückt werden können, **dadurch gekennzeichnet, dass** die Vorrichtung (1) aus antibakteriellem Silikonkautschuk gebildet ist.

2. Vorrichtung (1) nach Anspruch 1, wobei die Vorrichtung (1) antiseptische Partikel, beispielsweise Silberpartikel, enthält.

3. Vorrichtung (1) nach einem der Ansprüche 1 bis 2, wobei die Vorrichtung (1) sowohl eine innere als auch eine äußere hygienische Oberfläche umfasst.

4. Vorrichtung (1) nach einem der Ansprüche 1 bis 3, wobei die Vorrichtung (1) mindestens einen Griff (2) umfasst.

5. Vorrichtung (1) nach einem der Ansprüche 1 bis 4, wobei die Vorrichtung (1) zwei oder mehr Griffe (2) umfasst.

6. Vorrichtung (1) nach einem der Ansprüche 4 bis 5, wobei die Länge der Vorrichtung (1) in Bezug auf die innere Öffnung (4) des Griffs (2) so bemessen ist, dass verhindert wird, dass die Hand beim Schneiden dem Risiko einer Fleischwunde ausgesetzt wird.

7. Vorrichtung (1) nach einem der Ansprüche 4 bis 6, wobei die Finger und zumindest ein Teil der Handfläche durch die Öffnung (4) des Griffs (2) entweder auf der Oberseite oder auf beiden Seiten der Vorrichtung geführt sind.

8. Vorrichtung (1) nach einem der Ansprüche 4 bis 7, wobei die Vorrichtung (1) an jedem freien Ende der Beine mit einem Griff (2) versehen ist.

9. Vorrichtung (1) nach einem der Ansprüche 1 bis 8, wobei die Beine (3) der Vorrichtung (1) mit einer Tasche (5, 6) zur Aufnahme der Fingerspitzen versehen sind, so dass die Innenfläche des zu schneidenden Objekts nicht durch die Finger verunreinigt werden kann, auch nicht, wenn die Vorrichtung (1) unbeabsichtigt auf den Boden fällt.

10. Vorrichtung nach einem der Ansprüche 4 bis 9, wobei der Griff (2) einen integrierten Teil des Profils (1) bildet.

11. Vorrichtung nach einem der Ansprüche 4 bis 9, wobei der Griff zu einer Seite einer Längssymmetrieebene, die sich in Längsrichtung durch die Vorrichtung erstreckt, versetzt ist.

12. Vorrichtung nach einem der Ansprüche 1 bis 11, wobei mindestens eine, vorzugsweise sowohl die innere als auch die äußere Oberfläche, mit einer rutschhemmenden Textur oder Form versehen ist.

13. Verfahren zum Halten eines Produkts oder Gegenstands während des Schneidens unter Verwendung einer Vorrichtung (1) nach einem der Ansprüche 1 bis 12, **dadurch gekennzeichnet, dass** die Vorrichtung (1) um den zu schneidenden Gegenstand gelegt wird, indem die Hand um die Oberseite der Vorrichtung (1) gelegt wird und die Finger fest gegen die Außenfläche der Beine (3) der Vorrichtung (1) gedrückt werden, wobei die Fingerspitzen in einer außen angeordneten Tasche am unteren Ende zur Aufnahme der Fingerspitzen positioniert werden, die an den Enden der Seitenteile (3) ausgebildet ist, während die Handfläche die Vorrichtung (1) und den Gegenstand fest gegen eine Stützfläche drückt.

## Revendications

1. Dispositif profilé (1) de maintien d'un produit ou d'un objet, par exemple lors du tranchage du produit ou lors du maintien et du déplacement d'un produit ou d'un objet chaud, le dispositif profilé (1) étant pourvu de deux parties latérales opposées (3), espacées et reliées à une partie intermédiaire, le dispositif (1) ayant au moins une forme dans la direction longitudinale avec un profil longitudinal, le dispositif (1) ayant deux jambes ou brides (3) formant un corps monolithique ou unitaire avec la partie intermédiaire, les deux jambes ou brides (3) étant pliables et flexibles qui peuvent être pressées contre un produit ou un objet placé à l'intérieur du dispositif (1) au moyen d'une main d'une personne placée autour de l'objet à maintenir, **caractérisé en ce que** le dispositif (1) est formé par du caoutchouc de silicone antibactérien.

2. Dispositif (1) selon la revendication 1, dans lequel le dispositif (1) contient des particules antiseptiques, par exemple des particules d'argent.

3. Dispositif (1) selon l'une quelconque des revendications 1 à 2, dans lequel le dispositif (1) comprend à la fois une surface hygiénique intérieure et extérieure.

4. Dispositif (1) selon l'une quelconque des revendications 1 à 3, dans lequel le dispositif (1) comprend au moins une poignée (2) .

5. Dispositif (1) selon l'une quelconque des revendications 1 à 4, dans lequel le dispositif (1) comprend deux ou plusieurs poignées (2).

6. Dispositif (1) selon l'une quelconque des revendications 4 à 5, dans lequel la longueur du dispositif (1) par rapport à l'ouverture intérieure (4) de la poignée (2) est telle qu'elle empêche la main d'être exposée à un risque de plaie cutanée pendant le tranchage.

7. Dispositif (1) selon l'une quelconque des revendications 4 à 6, dans lequel les doigts et au moins une partie de la paume de la main sont enfilés à travers l'ouverture (4) de la poignée (2) sur le dessus ou sur les deux côtés du dispositif.

8. Dispositif (1) selon l'une quelconque des revendications 4 à 7, dans lequel le dispositif (1) est pourvu d'une poignée (2) à chaque extrémité libre des jambes.

9. Dispositif (1) selon l'une quelconque des revendications 1 à 8, dans lequel les jambes (3) du dispositif (1) sont formées avec une poche (5,6) pour loger les bouts des doigts, de sorte que la surface intérieure vers l'objet à trancher est empêchée d'être contaminée par les doigts, également dans le cas où le dispositif (1) tombe involontairement sur le sol.

10. Dispositif selon l'une quelconque des revendications 4 à 9, dans lequel la poignée (2) fait partie intégrante du profil (1) .

11. Dispositif selon l'une quelconque des revendications 4 à 9, dans lequel la poignée est décalée par rapport à un côté d'un plan de symétrie longitudinal s'étendant dans le sens de la longueur à travers le dispositif.

12. Dispositif selon l'une quelconque des revendications 1 à 11, dans lequel au moins une, de préférence les deux surfaces intérieure et extérieure, est pourvue d'une texture ou d'une forme anti-glissante.

13. Procédé de maintien d'un produit ou d'un objet pendant le tranchage en utilisant un dispositif (1) selon l'une quelconque des revendications 1 à 12, **caractérisé en ce que** le dispositif (1) est placé autour de l'objet à trancher en plaçant la main autour du dessus du dispositif (1) et en pressant fermement les doigts contre la surface extérieure des jambes (3) du dispositif (1), les bouts des doigts étant positionnés à l'intérieur d'une poche agencée extérieurement à l'extrémité inférieure pour loger les bouts des doigts, formé aux extrémités des parties latérales (3), tandis que la paume de la main presse le dispositif (1) et l'objet fermement contre une surface de support.
